# EUROPEAN PATENT SPECIFICATION

(11) **EP 2 446 295 B1**
(45) Date of publication and mention of the grant of the patent: **23.01.2013**
(21) Application number: 10730856.1
(22) Date of filing: 17.06.2010
(51) Int. Cl.: G01S 5/18, G01S 15/87

(54) **POSITION DETERMINING SYSTEM**
POSITIONSBESTIMMUNGSSYSTEM
SYSTÈME DE DÉTERMINATION DE POSITION

(30) Priority: 23.06.2009 EP 09163454
(43) Date of publication of application: 02.05.2012
(73) Proprietor: Koninklijke Philips Electronics N.V., 5621 BA Eindhoven (NL)
(72) Inventor: MARCELIS, Bout, NL-5656 AE Eindhoven (NL); VAN HEESCH, Christianus, Martinus, NL-5656 AE Eindhoven (NL); KLEE, Mareike, NL-5656 AE Eindhoven (NL); BABIC, Drazenko, NL-5656 AE Eindhoven (NL)
(74) Representative: Van Velzen, Maaike Mathilde
(86) International application number: PCT/IB2010/052726
(87) International publication number: WO 2010/150148

(56) References cited:
- WO-A1-2008/144139
- FR-A1- 2 817 973
- US-A- 5 940 346
- US-A1- 2006 235 583
- US-B1- 6 315 724
- US-B1- 6 720 876

## Description

### FIELD OF THE INVENTION

The invention relates to an imaging system, an imaging method and a computer program for imaging an object.

### BACKGROUND OF THE INVENTION

US 5,940,346 discloses a navigation system comprising a movable device within a given area, wherein the movable device includes an acoustic transmitter for transmitting a continuous acoustic signal over the area, a radio frequency receiver for receiving radio frequency signals of a plurality of different frequencies, and an electronic processor means. The navigation system further comprises three or more beacons positioned proximate to the given area within the range of the acoustic signal, wherein each of the beacons includes a signal receiving apparatus responsive to the acoustic signal to generate a radio frequency signal corresponding to a unique one of the plurality of different frequencies and a radio frequency transmitter for transmitting the radio frequency signal to the radio frequency receiver on the movable device. The acoustic signal and the radio frequency signal received from each of the beacons is processed in the electronic processor means to identify the location of the device within the area.

US 2008/0162046 A1 discloses a system for tracking an arrangement of at least one mobile apparatus in relation to an imaging device, wherein the system includes at least one position monitoring sensor in communication with a controller. The position monitoring sensor is operable to generate a signal indicative of a position of the at least one mobile apparatus relative to a reference point. The controller is operable to calculate a position of the at least one mobile apparatus relative to the imaging device. The at least one position monitoring sensor comprises preferentially transmitters and receivers for transmitting and receiving electromagnetic radiation, wherein the calculation of the position of the at least one mobile apparatus relative to the imaging device is calculated based on the radiation transferred between the transmitters and receivers.

This system has the drawback that the radiation sent by a transmitter can be partially or completely blocked, for example, by metal objects. In this case the system cannot work properly anymore and the accuracy of the determined position is decreased or a determination of the position is not possible at all, i.e. the quality of determining the position is reduced.

### SUMMARY OF THE INVENTION

It is an object of the present invention to provide an imaging system comprising a position determining system for determining a position of an object, wherein the quality of determining the position can be improved. It is a further object of the present invention to provide a corresponding imaging method and a computer program for imaging the object.

In a first aspect of the present invention an imaging system for imaging an object is presented, wherein the imaging system comprises:
- a position determining system for determining a position of the object, the position determining system comprising:
   - a first position detection unit comprising a sending and receiving unit for transferring ultrasound radiation between the object and a transfer position being known relative to a reference position, and a first position determining unit for determining a first position of the object relative to the reference position based on the transferred ultrasound radiation, wherein the first position is determined relative to the imaging system,
   - a second position detection unit comprising an accelerometer for determining an acceleration of the object, and a second position determining unit for determining a second position of the object relative to the reference position based on the determined acceleration and the determined first position, wherein the second position is determined relative to the imaging system,
   - an output unit for outputting at least one actual position being at least one of the first position and the second position,
- an imaging unit for imaging the object, and
- a moving unit for moving the imaging unit and the object relative to each other to a set position depending on the at least one actual position of the object relative to the imaging system.

If a transfer of radiation between the object and the transfer position is interrupted, the accuracy of the determined first position can be diminished. However, in this case the second position, which is based on an acceleration measurement performed by an accelerometer, can be output by the output unit. Moreover, if an accurately determined first position is available, the first position can be used to provide an initial value on which the determination of the second position can be based or the first position can be used to update the second position. This reduces the adverse effects on the accuracy of the determined second position, which can be caused by drift. Therefore, by determining the first and second positions as described above and by outputting at least one of the determined first and second positions, the quality of determining a position of an object can be improved.

The accelerometer is preferentially adapted to be attached to the object. The transfer position can be the reference position or any other position which is known relative to the reference position. The transfer position is a position at which radiation is sent to the object and/or received from the object.

The output unit can be any unit which provides at least one of the first position and the second position to a user or to a further unit for using the determined first position and/or second position for further processing, i.e. e.g. the further unit can be adapted to position the object based on the determined first position and/or the determined second position or the further unit can be adapted to prevent a collision of the object with a further object depending on the determined first position and/or the determined second position.

The adaptation of the sending and receiving unit to transfer ultrasound has the advantage that in contrast to radio frequency systems ultrasound is confined in a room, for example, in a surgical room, and is thus not interfering with systems in neighboring rooms. Moreover, in order to send and receive ultrasound a direct line-of sight is not needed and the sending and receiving unit can operate through, for example, sterile sheets, which are, for example, used in hospitals. Moreover, ultrasound does not show interference caused by magnetic materials, which can be present in or close to the sending and receiving path. Moreover, radio frequency systems can have the problem that electromagnetic pulses arriving at the detector through various reflections interfere with each other, thereby deteriorating a precise determination of the arrival of the pulse along the direct, i.e. shortest, path, thereby deteriorating the precision of a distance measurement, on which the determination of the first position is preferentially based as will be described further below. Since the speed of sound is much lower than the speed of light, multiple reflections that could be present when using ultrasound can more easily be separated in time, thereby maintaining a high precision.

Preferentially, the first position detection unit is adapted to determine the first position based on the transferred radiation by using a time-of-flight method.

The use of a time-of flight method for determining the first position has the advantage that a drift is not likely to occur, in particular, in comparison to determining a position based on an acceleration measurement.

It is further preferred that the sending and receiving unit is adapted to send radiation to the object for being reflected by the object and to receive radiation reflected by the object.

This allows determining the first position without attaching a transferring element to the object.

It is further preferred that the sending and receiving unit comprises a first transferring element located at the transfer position and a second transferring element for being attached to the object, wherein the first transferring element and the second transferring element are adapted for transferring radiation between the first transferring element and the second transferring element, wherein the first position determining unit is adapted to determine the first position depending on the transferred radiation.

This further improves the accuracy of determining the first position, i.e. this further improves the quality of determining the first position.

The second transferring element can be an active or a passive element. A passive element is, for example, an element which just reflects the radiation such that the first transferring element knows from the reflected radiation that it has been reflected by the second transferring element.

A transferring element can be an element which can be operated in a sending mode for sending radiation and/or in a receiving mode for receiving radiation, or a transferring element can comprise at least one sending element and at least one receiving element for allowing the transferring element to send and receive radiation simultaneously. This means that the transferring element is a sending element and/or a receiving element.

It is preferred that the sending and receiving unit comprises at least three first transferring elements located at transfer positions being known relative to the reference position and at least one second transferring element for being attached to the object, wherein the at least three first transferring elements and the at least one second transferring element are adapted to transfer radiation between the at least three first transferring elements and the at least one second transferring element, wherein the first position determining unit is adapted to determine the first position depending on the transferred radiation. The first position determining unit is preferentially adapted to determine the first position depending on the transferred radiation by triangulation and/or trilateration.

This allows determining the first position with high accuracy in three dimensions, wherein the at least three first transferring elements and the at least one second transferring element define at least three radiation paths along which the radiation is transferred. If more than three of these paths are used for determining the first position, i.e. if more than three first transferring elements and/or if more than one second transferring element are used, the first position can be determined accurately, even if, for example, one of these radiation paths is blocked, as long as at least three of these radiation paths are not interrupted.

It is preferred that the position determining system further comprises an error determination unit for determining an error of at least one of the first position and the second position, wherein the output unit is adapted to output at least one of the first position and the second position based on the determined error.

This allows outputting the first position, if an error has been determined for the second position being above a predefined threshold indicating that the second position is not reliable. Moreover, this allows outputting the second position, if an error determined for the first position is above a predefined threshold indicating that the first position is not reliable.

For example, an error of the first position above a predefined threshold can indicate that the sending and receiving unit does not transfer radiation between the known transfer position and the object being sufficient for determining the first position. In particular, if the sending and receiving unit defines three or more radiation paths along which the radiation is transferred to and from the object in order to determine the first position of the object, the error is above the predefined threshold, if the radiation paths are blocked such that less than three radiation paths are not interrupted. In this case the second position is output by the output unit.

Moreover, an error of the second position above a predefined threshold can indicate that a drift in the determined acceleration has occurred which renders the second position non reliable. In this case the first position is output by the output unit.

After a certain amount of time has passed, generally an error of the second position has grown up due to bias and resulting drift. The output unit can therefore be adapted to output the first position, if this certain amount of time has passed since a last update of the second position by using the first position and if an error of the first position is below a threshold indicating that the first position is reliable.

It is preferred that the second position determining unit is adapted to use the determined first position as a start position, to determine a movement of the object starting from the start position based on the determined acceleration and to determine the second position based on the start position and the determined movement of the object.

Preferentially, the movement of the object starting from the start position is determined by integrating the determined acceleration. By knowing the start position being the first position and by knowing the movement of the object the current second position can be determined. For determining the second position based on the movement and the start position preferentially the determined movement is integrated again resulting in a path, which is added to the start position, in order to determine the current second position.

The first position detection unit and the second position detection unit are preferentially adapted to detect several first positions and several second positions subsequently in time. The first position is preferentially continuously detected by continuously transferring radiation between the object and the know transfer position and by determining the first position of the object relative to the reference position based on the transferred radiation. The second positions are preferentially determined based on an initial first position and acceleration values describing the movement of the object relative to the reference position. Preferentially, after a time interval the second position is updated with a currently determined first position. This time interval can be a predefined time interval or this time interval can be defined by the time between the last update and the time at which an error determined for the second position exceeds at threshold indicating that the currently determined second position is not reliable.

It is further preferred that the second position detection unit comprises a gyroscope for being attached to the object for determining the orientation of the object, wherein the second position determining unit is adapted to use the determined first position as a start position, to determine a movement of the object starting from the start position based on the determined acceleration and the orientation of the object determined by the gyroscope, and to determine the second position based on the start position and the determined movement of the object.

This allows, for example, determining the second position, even if the orientation of the accelerometer is a priori not known and/or if the orientation of the accelerometer changes after the start position has been defined.

The gyroscope can be any unit which allows determining the orientation of the object. For example, MEMS based gyroscopes can be used, which are based on vibrating a structure and measuring the effect of the Coriolis force upon the exertion of torque, i.e. rotation, of the gyroscope, such as a tuning fork gyroscope or a vibrating wheel gyroscope. The gyroscope can be integrated in the accelerometer in order to determine, for example, three position coordinates and three angle coordinates defining the orientation of the object.

The accelerometer is preferentially adapted to determine the acceleration along three orthogonal axes. The accelerometer can be a single tri-axial accelerometer or the accelerometer can be comprised of several separate single accelerometers, wherein these several single accelerometers measure the acceleration in different directions.

It is further preferred that the position determining system comprises a moving unit control unit for controlling the moving unit depending on the output at least one of the first position and the second position of the object for moving the object to a set position. The set position can be set by a user, or can be a position which has been determined as a position at which the object has to be located for performing a further operation on the object like imaging the object. The set position can also be predefined.
This allows positioning an object with high accuracy.

It is further preferred that the position determining system is adapted to determine the first position and the second position of the object relative to a position of a further object, wherein the position determining system further comprises a collision preventing unit for determining if the further object enters a predefined safety region around the object and for outputting a signal if the collision preventing unit has determined that the further object enters the predefined safety region. The position of the further object can have known spatial relationship to the reference position, thereby allowing directly determining the position of the object relative to the further object by determining the first position and the second position relative to the reference position. The object is, for example, a patient or a patient table, and the further object is, for example, a part of an imaging system for imaging the patient.

Since the position of the object can be determined by the position determining system, a predefined safety region can be arranged around the object by using the actually determined position of the object, wherein the collision preventing unit outputs a signal, if the further object enters this safety region, i.e. if a part or the entire further object enters the safety region. The signal output by the collision preventing unit can be provided to a user as a warning signal, in particular, as an acoustical and/or optical warning signal, and/or the signal output by the collision preventing unit can be provided to a moving unit moving the object and the further object relative to each other in order to stop or slow down the movement.

The imaging system comprises the position determining system for determining the position of the object relative to the imaging system. This allows accurately imaging the object based on the determined, i.e. output, position of the object. The imaging unit can, for example, comprise a reconstruction unit for reconstructing an image of the object, wherein the reconstruction can be based on the determined position of the object. Since the accuracy of determining the position is improved by the positioning system, the quality of the reconstructed image can be improved.

The imaging system comprises an imaging unit for imaging the object and a moving unit for moving the imaging unit and the object relative to each other to a set position depending on a determined actual position of the object relative to the imaging system.

This allows accurately positioning the imaging unit with respect to the object to be imaged. For example, this allows accurately positioning an imaging unit of an imaging system like a C-arm with respect to an object table on which the object to be imaged is located.

The imaging system is preferentially an imaging system like a C-arm, which has to be positioned relative to an object table on which an object like a person is located.

The imaging system can also be another imaging modality like a computed tomography imaging system, a magnetic resonance imaging system, an ultrasound imaging system, or a nuclear imaging system like a positron emission tomography system or a single photon emission computed tomography system.

The imaging unit comprises preferentially a radiation source for emitting imaging radiation for traversing the object and a detection unit for detecting the imaging radiation after having traversed the object. A reconstruction unit is preferentially adapted to reconstruct an image of the object based on the detected imaging radiation.

In order to determine the position of the object relative to the imaging system, the sending and receiving unit comprises preferentially transferring elements which are attached to the imaging system and to the object. This attachment can be a direct attachment, i.e. the transferring elements can be directly attached to the imaging system and/or to the object, or this attachment can be an indirect attachment, wherein the transferring elements are attached to a further object, to which the imaging system and/or the person, respectively, has a known spatial relationship. For example, if the imaging system is mounted on a wall or a ceiling of a room, wherein the position of the imaging system with respect to the wall or ceiling, respectively, is known, the transferring elements can be attached to the wall or ceiling, respectively. Furthermore, if the object is located on an object table, wherein the spatial relationship of the object with respect to the object table is known, the transferring elements can be attached to the object table. Furthermore, also the accelerometer can be attached directly to the object or can be indirectly attached to the object, wherein the accelerometer is attached to a further object and wherein the spatial relationship between the further object and the object to be imaged is known. For example, also the accelerometer can be attached to the object table. The transferring elements and the accelerometer can be separate elements or they can be integrated into a single element, i.e. transferring elements can be provided, wherein in these transferring elements the accelerometer is integrated. The several transferring elements are attached to the imaging system at transfer positions being known relative to the reference position, in order to allow the first position determining unit to determine the position of the object relative to the reference position.

It is further preferred that the positioning system of the imaging system comprises the collision preventing unit for outputting a signal, if the imaging system enters a predefined safety region around the object.

For example, if the object is a patient located on a patient table, wherein the position of the patient table, and, thus, of the object being, in this example, a patient, is determined by using the position determining system, the safety region can be defined such that a patient is surely within this safety region, if the patient is lying on the patient table. The signal output by the collision preventing unit can be provided to a user as a warning signal, in particular, as an acoustical and/or optical warning signal, and/or the signal output by the collision preventing unit can be provided to the imaging system and/or to the patient table in order to stop or to slow down the movement of the imaging system and/or of the patient table.

In a further aspect of the present invention an imaging method for imaging an object is presented, wherein the imaging method is adapted to use the imaging system as defined in claim 1 and comprises the steps of:
- detecting a first position of the object by a first position detection unit comprising a sending and receiving unit and a first position determination unit, wherein ultrasound radiation is transferred between the object and a transfer position being known relative to a reference position by the sending and receiving unit and wherein the first position of the object relative to the reference position is determined based on the transferred ultrasound radiation by the first position determination unit, wherein the first position is determined relative to the imaging system,
- detecting a second position of the object by a second position detection unit comprising an accelerometer and a second position determining unit, wherein an acceleration of the object is determined by the accelerometer, and wherein a second position of the object relative to the reference position is determined based on the determined acceleration and the determined first position by the second position determining unit, wherein the second position is determined relative to the imaging system,- outputting at least one actual position being at least one of the first position and the second position by an output unit,
- imaging the object by an imaging unit, and
- moving the imaging unit and the object relative to each other to a set position depending on the at least one actual position of the object relative to the imaging system by a moving unit.

In a further aspect of the present invention a computer program for imaging an object is presented, wherein the computer program comprises program code means for causing an imaging system as defined in claim 1 to carry out the steps of the imaging method as defined in claim 10, when the computer program is run on a computer controlling the imaging system.

It shall be understood that the imaging system of claim 1, the imaging method of claim 10 and the computer programs of claim 11 have similar and/or identical preferred embodiments, in particular, as defined in the dependent claims.

It shall be understood that a preferred embodiment of the invention can also be any combination of the dependent claims with the respective independent claim.

### BRIEF DESCRIPTION OF THE DRAWINGS

These and other aspects of the invention will be apparent from and elucidated with reference to the embodiments described hereinafter. In the following drawings:
Figs. 1 to 4 show schematically and exemplarily embodiments of a position determining system,
Fig. 5 shows schematically and exemplarily an embodiment of an imaging system,
Fig. 6 shows a flowchart exemplarily illustrating an embodiment of a position determining method,
Fig. 7 shows a flowchart exemplarily illustrating an embodiment of an imaging method.

### DETAILED DESCRIPTION OF EMBODIMENTS

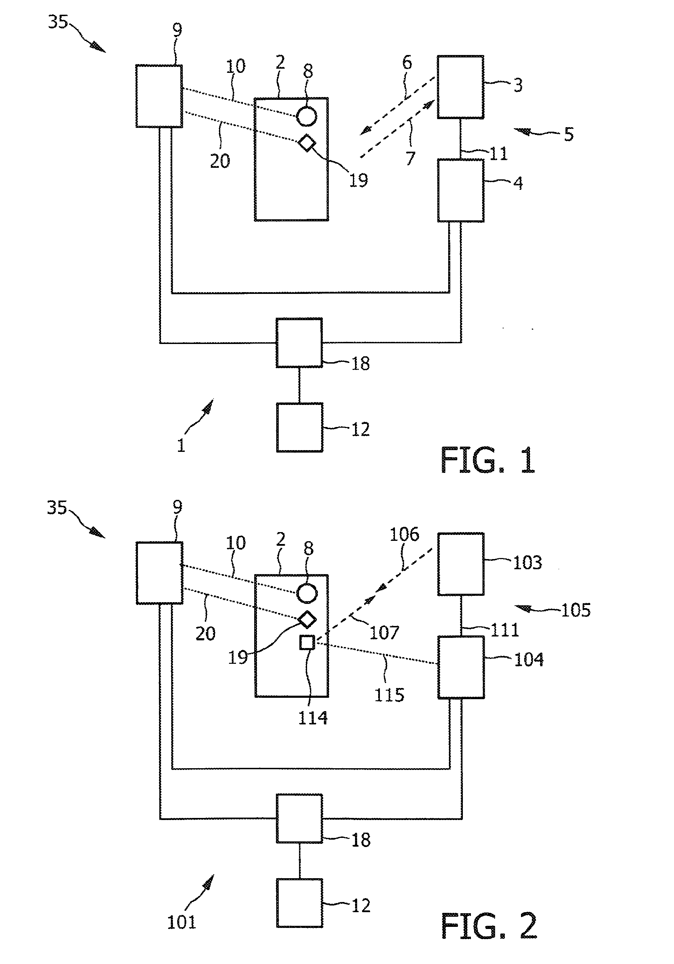

Fig. 1 shows schematically and exemplarily a position determining system 1 for determining a position of an object 2. The position determining system 1 comprises a first position detection unit 5 and a second position detection unit 35. The first position detection unit 5 comprises a sending and receiving unit 3 for sending radiation 6 to the object 2 and for receiving radiation 7 from the object 2. The first position detection unit 5 further comprises a first position determining unit 4 for determining a first position of the object based on the received radiation 7. The second position detection unit 35 comprises an accelerometer 8, which is attached to the object 2, for determining an acceleration of the object 2. The second position detection unit 35 further comprises a second position determining unit 9 for determining a second position of the object 2 based on the determined acceleration and the determined first position. The sending and receiving unit 3 sends radiation 6 to the object 2 from a transfer position being known with respect to a reference position. The sending and receiving unit is, in this embodiment, not moving. The accelerometer measures therefore the acceleration relative to the transfer position and, thus, since the transfer position is known relative to the reference position, relative to the reference position. The first and second position determination units determine the first and second positions relative to the reference position.

The sending and receiving unit 3 is connected with the first position determining unit 4 via a data link 11 and the accelerometer 8 is connected with the second position determining unit 9 via a data link 10. This data links can be wired or wireless data links.

The position determining system 1 further comprises an output unit 12 for outputting at least one of the first position and the second position. The output unit 12 can be a unit which provides the first position and/or the second position to a user via, for example, a display unit. In addition or alternatively, the output unit 12 can be adapted to provide the first position and/or the second position to a further unit, for example, for performing a positioning procedure for positioning the object 2 depending on the determined first position and/or the determined second position. The output unit 12 can also be adapted to provide the determined first position and/or the determined second position to a further unit being adapted to prevent a collision between the object and a further object based on the determined first position and/or the determined second position of the object.

The position determining system 1 further comprises an error determination unit 18 for determining an error of at least one of the first position and the second position, wherein the output unit is adapted to output at least one of the first position and the second position based on the determined error. Examples for determining the error of the first position and of the second position and for outputting the first position and/or the second position depending on the error will be described further below.

The sending and receiving unit 3 is adapted to transfer ultrasound, wherein the first position determining unit 4 is adapted to determine the first position of the object 2 by using a time-of-flight method. Thus, the time, which the ultrasound needs for being transferred from the sending and receiving unit 3 to the object 2 and from the object 2 back to the sending and receiving unit 3 is used for determining the position of the object 2. In the embodiment shown Fig. 1, the sending and receiving unit 3 sends radiation 6 to the object 2, which is reflected by the object 2, wherein the reflected radiation 7 is received by the sending and receiving unit 3. If ultrasound is emitted substantially in only one direction, the first position of the object 2 is determined only along this direction. However, the sending and receiving unit 3 can be adapted to send radiation to the object 2 in different directions, in order to determine the position of the object 2 in several dimensions, in particular, in three dimensions.

Fig. 2 shows schematically and exemplarily a further embodiment of a position determining system 101, which differs from the position determining system 1 shown in Fig. 1 by the sending and receiving unit 105. The position determining system 101 shown in Fig. 2 comprises a sending and receiving unit including a first transferring element 103 and a second transferring element 114 being attached to the object 2. The first transferring element 103 and the second transferring element 114 are adapted to transfer radiation 106, 107 between them. The first position determining unit 104 is adapted to determine the first position relative to the position of the first transferring element 103, which can be regarded as the reference position and the transfer position, depending on the transferred radiation 106, 107. In this embodiment, the first transferring element 103 and the second transferring element 114 are active elements, which can be operated in a sending mode or in a receiving mode, in order to allow the first transferring element 103 and the second transferring element 114 to communicate with each other. In another embodiment, one of the first transferring element 103 and of the second transferring element 114 can be a passive element which just reflects the radiation such that the element, which receives the reflected radiation, knows from the reflected radiation that it has been reflected by the passive transferring element. For example, the passive transferring element can be adapted such that the reflected radiation has an intensity within a predefined intensity range, wherein, if radiation is received by the active transferring element, which has an intensity within the predefined intensity range, it is known that the transferred radiation is radiation reflected by the passive transferring element. Moreover, in an embodiment the first transferring element and/or the second transferring element can comprise at least one sending element and at least one receiving element for allowing the respective transferring element to send and receive radiation simultaneously.

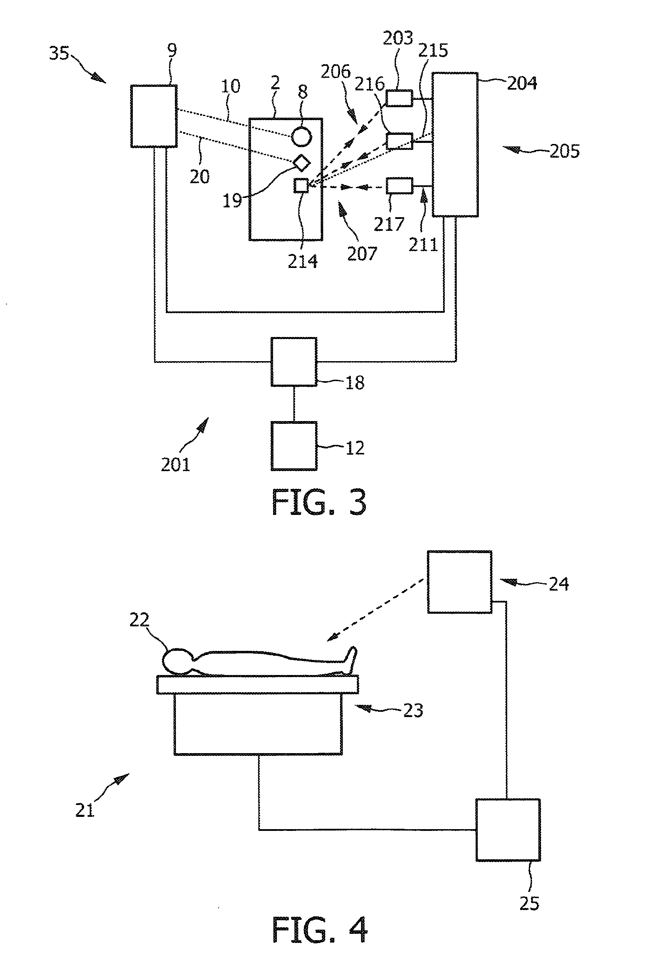

In a preferred embodiment, which is schematically and exemplarily shown in Fig. 3, the first position detection unit (205) comprises a sending and receiving unit including at least three first transferring elements 203, 216, 217 being located at transfer positions being known relative to a reference position and at least one second transferring element 214 attached to the object 2. The at least three first transferring elements 203, 216, 217 and the at least one second transferring element 214 are adapted to transfer radiation 206, 207 between the at least three first transferring elements 203, 216, 217 and the at least one second transferring element 214, wherein the first position determining unit 204 is adapted to determine the first position relative to the reference positions depending on the transferred radiation 206, 207, in particular, by trilateration and/or triangulation.

This allows determining the first position with high accuracy in three dimensions, wherein the at least three first transferring elements 203, 216, 217 and the at least one second transferring element 214 define at least three radiation paths along which the radiation is transferred. If more than three of these paths are used for determining the first position, i.e. if more than the three first transferring elements 203, 216, 217 and/or more than the one second transferring element 214 are used, the first position can be determined accurately, even if, for example, one of these radiation paths is blocked, as long as at least three of these radiation paths are not interrupted.

The first position determining unit 204 is preferentially adapted to determine the distances between the second transferring element 214 and the respective first transferring element 203, 216, 217 from the time-of-flight between the second transferring element 214 and the respective first transferring element 203, 216, 217, i.e. three distances are determined between the second transferring element 214 and the first transferring element 203, 216, 217. In this embodiment, the first position determining unit 204 is preferentially also adapted to determine the respective angle under which the respective radiation path meets the respective first transferring element 203, 216, 217. Based on these distances and these angles and based on the known locations of the first transferring elements 203, 216, 217 the first position determining unit determines the position of the object 2, in particular, by trilateration and triangulation.

The positioning system 201 can also be adapted to determine only distances between the three radiation paths by using the time-of-flight along these three radiation paths. Since the transfer positions of the three first transferring elements 203, 216, 217 are known relative to the reference position, these known transfer positions can be used for determining the three-dimensional position of the second transferring element 214, i.e. the position of the object 2, by trilateration.

Alternatively, the position determining system 201 shown in Fig. 3 can be adapted to only measure the angles of the three radiation paths. In order to measure these angles, in this example, the transferring elements comprise preferentially phased arrays like arrays of separate or integrated ultrasound transducers or radio frequency transducers, an array of photodiode detectors, or a camera. By knowing the three angles with respect to the three known transfer positions of the three transferring elements 203, 216, 217 the three-dimensional position of the second transferring element 214, i.e. of the object 2, can be determined by triangulation.

The position determining system 201 can also be adapted to determine both distances and angles of the radiation paths as already described above. This results in a redundancy in the data and can be used to improve the quality of the determination of the first position, in particular, similarly to having more than three radiation paths.

The position determining system 101 shown in Fig. 2 can also be adapted such that the first transferring element 103 and the second transferring element 114 are used for measuring both the angle of the radiation path in two directions and the distance between the first transferring element 103 and the second transferring element 114. This determined angle in two directions and this determined distance together with the known transfer position of the first transferring element 103 also yield the three-dimensional position of the second transferring element 114 and, thus, of the object 2.

In Fig. 2, the second transferring element 114 is connected with the first position determining unit 105 via a wireless data link 115 and the first transferring element 103 is connected with the first position determining unit 104 via a wired or wireless data link 111. In Fig. 3, the second transferring element 214 is connected with the first position determining unit 204 via a wireless data link 215 and the first transferring elements 203, 216, 217 are connected with the first position determining unit 204 via wired or wireless data links 211.

The position determining system can also be adapted to transfer radiation in one-way only. For example, the position determining system shown in Fig. 2 can also work by transferring radiation 106 or 107 in only one direction, i.e. to send radiation from the first transferring element 103 to the second transferring element 114, where the first transferring element 103 is only sending and the second transferring element 114 is only receiving and the information of receiving the radiation 106 by the second transferring element 114 is communicated to the first position determining unit 104 via data link 115, or to send radiation from the second transferring element 114 to the first transferring element 103, with the second transferring element 114 only sending and the first transferring element 103 only receiving, wherein a trigger to send the radiation 107 is communicated to the second transferring element 114 via data link 115. Data links 111 and/or 115 can be used to synchronize the events at the first and the second transferring elements. For example, the data links 111, 115 can be used to start a clock at the second transferring element 114 simultaneously with the start of sending radiation 106 from the first transferring element 103. Upon receiving the radiation 106 at the second transferring element 114, the clock is stopped and the elapsed time indicative of the time-of-flight is sent back to the position determining unit 104 via the data link 115.

In a similar way, also the first transferring elements 203, 216, 217 and the second transferring element 214 shown in Fig. 3 can be adapted to determine one-way time-of-flights.

As already described above, the position determining system can also be operated in two-ways, in particular, the position determining system shown in Fig. 2 can be adapted to send radiation 106 and 107 in both directions, wherein, for example, the radiation 106 can be regarded as a first sending and the radiation 107 can be regarded a response to the first sending or vice versa. If the radiation 106 is regarded as a first sending and the radiation 107 as a responsive sending, the second transferring element 114 acts as an active reflector. If firstly the radiation 106 is sent and then the responsive radiation 107 is sent by the second transferring element 114, immediately or with a known time delay, the data link 115 becomes optional, because the second transferring element can operate based on only receiving radiation 106 and sending radiation 107. In a similar way, also the second transferring element 214 or the first transferring elements 203, 216, 217 shown in Fig. 3 can act as an active reflector.

The data links 115, 215 can be wired or wireless data links.

Preferentially, the elements or units for sending and/or receiving radiation are adapted to send and/or receive radiation which is used for the purpose of measuring the distance between a sending element and a receiving element and preferentially additionally for the purpose of synchronizing the respective transferring elements. By synchronizing the respective transferring elements the time-of flight of the radiation can be determined with an improved accuracy, thereby increasing the accuracy of measuring the distance and, thus, of determining the first position.

The second position detection units 35 shown in Figs. 1, 2 and 3 are similar. Each of the second position detection units 35 comprises a second position determining unit 9 which is adapted to use the determined first position as a start position, to determine a movement of the object 2 starting from the start position based on the acceleration determined by the accelerometer 8 and to determine the second position based on the start position and the determined movement of the object. The second position determining unit 9 is adapted to determine the movement of the object 2 starting from the start position by integrating the determined acceleration. By knowing the start position being the first position and by knowing the movement of the object 2, the current second position can be determined. The second position determining unit 9 is adapted to integrate the determined movement resulting in a path, which is added to the start position, in order to determine the current second position based on the movement and the start position.

The second position detection unit 35 further comprises a gyroscope 19 for being attached to the object 2 for determining the orientation of the object. Therefore, since the orientation of the object is known from the gyroscope 19, the second position determining unit 9 is adapted to use a determined first position as a start position, to determine a movement of the object 2 starting from this start position based on the determined acceleration and the determined orientation of the object 2, and to determine the second position based on the start position and the determined movement of the object. The gyroscope 19 can be any element which allows determining the orientation of the object. For example, the gyroscope 19 can be a MEMS gyroscope like a tuning fork or a vibrating wheel gyroscope. The gyroscope 19 can be integrated in the accelerometer 8. Alternatively or in addition, the accelerometer itself can provide acceleration values which can be used for determining the orientation of the object. For example, the accelerometer can be a tri-axial accelerometer, wherein the orientation of the three axes of the accelerometer is determined with reference to the gravity vector, i.e. the acceleration components along each axis of the accelerometer, which are caused by gravity, can be determined, in order to determine the orientation of the gravity vector with respect to the three axes of the accelerometer. Since the orientation of the gravity vector is known, i.e. the vertical direction, by determining the orientation of the gravity vector with respect to the three axes of the accelerometer, the orientation of the accelerometer can be determined. Moreover, several accelerometers can be used, wherein the orientation of the object can be deduced from the accelerations determined by the several accelerometers. In order to determine the orientation of the object from the accelerations determined by the several accelerometers, the accelerometers are located at different spatial locations in order to measure the acceleration of several distinct points on the object. The several accelerometers can be integrated all into a single package. From the accelerations measured at several distinct points on the object the orientation of the object can readily be determined. For example, if the object is undergoing a linear movement without changing its orientation, all accelerations will point in the same direction with the same magnitude. Thus, if the accelerations point in the same direction with the same magnitude, it is determined that the orientation has not changed. If the object is rotated, i.e. if the orientation of the object is changed, the accelerations of different locations on the object do not point in the same direction and can have different magnitudes. This change of orientation can be determined from the directions and magnitudes of the measured accelerations. Thus, by combining the acceleration of different locations of the same object both the changes of the position and of the orientation can be determined. Thus, if the orientation of the object is a priori known, because, for example, at a certain point in time the object is set in a known orientation, the orientation of the object can be determined based on the determined accelerations.

The gyroscope 19 can use a magnetic sensor for sensing the earth magnetic field similar to a compass as a reference, wherein the orientation of the object 2 is determined as orientation with respect to the earth magnetic field.

As already mentioned above, the accelerometer is preferentially a tri-axial accelerometer, in particular, a single tri-axial accelerometer. However, the accelerometer can also be comprised of several separate single accelerometers, wherein these several single accelerometers measure the acceleration in different directions.

Also the gyroscope 19 can be a single gyroscope for determining the orientation of the object 2 or it can also be comprised of different gyroscopes, in particular, of three orthogonal gyroscopes, in order to determine the orientation of the object 2.

As already mentioned above, by doubly integrating the measured acceleration under consideration of the orientation of the object and an initial starting position detected by the first position detection unit, the instantaneous second position can be calculated. The determination of the second position does not need a line-of-sight to another sensor and has a very fast update rate. Moreover, relatively cheap micro-machined accelerometers can be used.

The accelerometer, the gyroscope, and a preferred sending and/or receiving element, i.e. a transferring element, or preferred multiple sending and/or receiving elements can all be integrated into a single unit. If these elements are all integrated into a single unit, which is attached to the object at a certain location, the determined first position and the determined second position both relate to the same position on the object. If, for example, the accelerometer and a sending and/or receiving element are attached at different locations on the object, the relative position of the accelerometer and the sending and/or receiving element with respect to each other can be used in order to map the determined first position and the determined second position onto each other. For example, for determining the second position the determined first position can be mapped onto the position of the accelerometer on the object for providing an initial second position which is used together with the determined movement of the object for determining the current second position. If the different elements used for determining the first position and/or the second position are not arranged at the same location on the object, the respective locations are known with respect to the object and these known locations are used for determining the first position and/or the second position of the object.

A model of the object can be provided, wherein the locations of the elements used for determining the position of the object are known on the model of the object. By using this model the position of this model and preferentially also the orientation of this model can be determined based on the determined first and/or the second position of the elements, which are located on the object, as the position of the object. Since the locations of the elements used for determining the first position and/or the second position on the object are known with respect to the object, a three-dimensional position of a location on the object relative to a reference position can be determined and can be regarded as the position of the object. In particular, the position of a sending and/or receiving element attached to the object and/or the position of an accelerometer attached to the object can be regarded as the determined position of the object, i.e. as a position of the object with respect to a reference position in a reference system defined, for example, by an imaging system, which will be described further below.

Preferentially, the first position detection unit determines the first position and absolute coordinates with respect to a reference position in a reference coordinate system, wherein these absolute coordinates are used as initial start position for determining the second position based on acceleration values determined by the accelerometer and based on orientation values, which can be determined by the gyroscope. The subsequently determined first positions are preferentially further used for resetting or recalibrating the determination of the second position automatically on a regular basis. This eliminates a possible drift problem of the determination of the second position.

The output unit 12 is preferentially adapted to output the second position, if an error determined by the error determination unit 18 indicates that the sending and receiving unit does not receive radiation from the object being sufficient for determining the first position. For example, if the sending and receiving unit defines three or more radiation paths along which the radiation is transferred to and/or from the object in order to determine the first position of the object 2, the output unit 12 outputs the second position, if the radiation paths are blocked such that less than three radiation paths are not interrupted. This allows providing an actual position of the object, even if the radiation paths are blocked. Moreover, the output unit 12 is preferentially adapted to output the determined second position between two first position detection events. Since the detection of the first position takes generally a longer time than the detection of the second position, a position of the object can be provided by providing the second position, even if an updated first position is not available. Thus, position updates can be provided on a faster time scale. This reduces jitter and improves the overall dynamic accuracy.

The output unit can be adapted to provide the first position and the second position to a combination unit for combining the first position and the second position by using a Kalman type filter or a similar mathematical model for determining a combined position.

The position determining system can also be adapted such that the output unit 12 outputs the second position, if the first position is determined based on a set of non-simultaneous distance measurements between several first transferring elements at known locations and a second transferring element attached to the object, while the object is moving. Non-simultaneous measurements can be used to avoid interference between radiation sent from different transferring elements, i.e. to avoid a simultaneous arrival of radiation from different transferring elements at a transferring element which just receives the radiation, which could lead to interference and deteriorate the quality of the determination of the first position. If the object is moving, the different sequential distance measurements are related to different object localizations and this relates to an error in the calculated first position, which is determined by the error determination unit 18. In this case, in an embodiment the output unit 12 outputs the second position.

If the object is moving and if the first position is determined based on non-simultaneous measurements, the determined second positions can be used to estimate the path of the moving object and to relate the different object localizations to a single reference position before calculating the first position. In this way the determination of the first position can be corrected for the fact that the sequential measurements correspond to different object localizations, thereby allowing for outputting the first position for the moving object with an error which is reduced in comparison to an error of a first position determined without correcting the sequential measurement.

Preferentially, if the sending and receiving unit receives radiation from the object being sufficient for determining the first position, for example, if at least three radiation paths are not blocked, and if a new actually determined first position is available, this first position is output by the output unit.

As already mentioned above, a determined first position is preferentially used as an initial position or a start position for determining the second position. After starting at the initial position a series of second positions can be determined by double integrating the measured acceleration values. The error determination unit 18 can then be adapted to compare the current second position with a new actually determined first position. If the difference between these two positions, i.e. the error, is smaller than a predefined threshold, the new actually determined first position can be accepted as a reliable measurement and output by the output unit 12. Furthermore, if the new actually determined first position is accepted as a reliable measurement, the new actually determined first position can be used to update the second position. For example, the error determination unit 18 can send a corresponding signal to the second position determining unit 9 indicating that the new actually determined first position can be used for updating the second position.

If the error determination unit 18 detects that the difference is larger than the threshold, the new actually determined first position might not be reliable and the output unit 12 preferentially outputs the second position. The difference, i.e. the absolute difference, is larger than the threshold, if, for example, a radiation path, along which radiation is sent and received for determining the first position, is blocked. The output unit 12 or the error determination unit 18 can be adapted to provide a warning to a further unit like an imaging system, which will be described further below, or to a user that the accuracy cannot be guaranteed. The position determining system can be adapted to repeat the determination of the first position a few times until the difference between the first position and the second position is below the threshold, indicating that, for example, a temporally blocking of a radiation path has stopped and the first position is again acceptable. Alternatively, the variance of a set of repeated determinations of the first position can give an error estimate of the new actually determined first position, if it is known from the determined second position that the object is not moving, because if the object is not moving, the variance of the set of determined first positions should be rather small. If this variance is above a predefined threshold, the new actually determined first position is regarded as being non-reliable. In this case, preferentially the output unit 12 outputs the second position and the new actually determined first position is not used for updating the second position.

Moreover, if it is known from the determined second position that the object is not moving or that the movement is below a certain speed which cannot cause sudden large jumps in the determined first position, the determined first position is regarded as being non-reliable or as spurious outlier, i.e. an error in determining the first position is determined, if these sudden large jumps occur in the first position. These sudden large jumps can, for example, occur due to temporally blocking of a radiation path. Also in this case, if the determined first position is regarded as being non-reliable, the output unit outputs the second position and preferentially a warning that the output position might not be reliable. Furthermore, in this case the second position is not updated based on the determined first position.

The absolute difference between the current second position and the new actually determined first position can be used to estimate the current error of the overall position determination, wherein a large difference indicates a large error and a small difference indicates a small error. Alternatively or in addition, the error can be calculated by more sophisticated means where also the history and separate variances of the first position and the second position are taken into account, for example, by using a Kalman filter or similar or more advanced types of mathematical models that monitor trends in the data and relate the position, velocity, acceleration and orientation updates that can be obtained from the position determining system. For example, the trend determined based on the first positions might relate to a linear motion. If, in this case, the determination of the positions should be reliable, also the determined second position should indicate a linear motion.

The sending and receiving unit can define more than three radiation paths, which point in different directions, wherein several first positions can be determined by grouping distances, which have been determined along different radiation paths, wherein each of these groups comprises three radiation paths and wherein for each of these groups a first position is determined. For example, if four radiation paths are defined by the sending and receiving unit, following combinations of radiation paths can be used for differently determining several first positions: 1-2-3, 2-3-4, 1-3-4, 1-2-4. Each of these determined first positions should substantially be the same, if the corresponding distances are measured simultaneously. A difference between these determined first positions indicates therefore an error in determining the first position. If only one of these determined first positions differs significantly from the other of these determined first positions, the significantly differing determined first position is discarded, and the other determined first positions are preferentially averaged for determining an average first position.

If more than three radiation paths are defined by the sending and receiving unit, the measured distances along these radiation paths can be used for determining further parameters like the current speed of sound in the case of ultrasound radiation. This allows for real-time monitoring and calibration/correction for changes in the speed of sound, related to, for example, changes in ambient temperature, humidity or air flow, that otherwise deteriorate the accuracy when using ultrasound. Alternatively, a local estimate of the speed of sound can be obtained by sending and receiving signals between two transferring elements at known locations, which are, for example, provided on an imaging system. The determined speed of sound can be used for determining the distances along the radiation path more accurately by using the time-of-flight method.

The current speed of sound is preferentially determined by using a known distance between two transferring elements, for example, by using a known distance between two first transferring elements. The current speed of sound is preferentially obtained by dividing the known mutual distance by the time-of-flight between the transferring elements. If more than three radiation paths are defined, for example, if more than three first transferring elements at known transfer positions and a single second transferring element at an unknown position are used, a set of equations can be generated in the following way. The distance of the object, i.e. of the second transferring element, at the unknown position to every first transferring element is set equal to the time-of-flight between the respective first transferring element and the second transferring element multiplied by the speed of sound to be determined. In this way a set of at least four equations is obtained, which can be simultaneously solved, for instance, by the well known chi-squared minimization technique, in order to determine the unknown position of the second transferring element and the unknown current speed of sound.

As the second position detection unit provides position updates with a predicable accuracy within a certain time frame, this can be used to lower the duty-cycle of the first position detection unit, i.e. only using the first position when the accuracy of the second position exceeds a predefined threshold. Or, more simply, after a fixed time interval, for example, one second, that can be longer than the update rate that is needed by the user or, for example, by an imaging system, of, for example, 15 milliseconds, the first position is updated. This lowers the power consumption, which might be relevant for fully wireless or battery operated applications.

Fig. 4 shows schematically and exemplarily a further embodiment of a position determining system. The position determining system 21 comprises the different units and elements described above for determining the position of the object 22. In particular, the position determining system 21 comprises the different units and elements described above with reference to Fig. 1, Fig. 2, or Fig. 3. These elements and units are indicated by a box 24 and an arrow only for clarity reasons. The position determining system 21 further comprises a moving unit 23 for moving the object 22, and a moving unit control unit 25 for controlling the moving unit depending on the determined position of the object 22 for moving the object 22 to a set position. The object 22 is preferentially a patient.

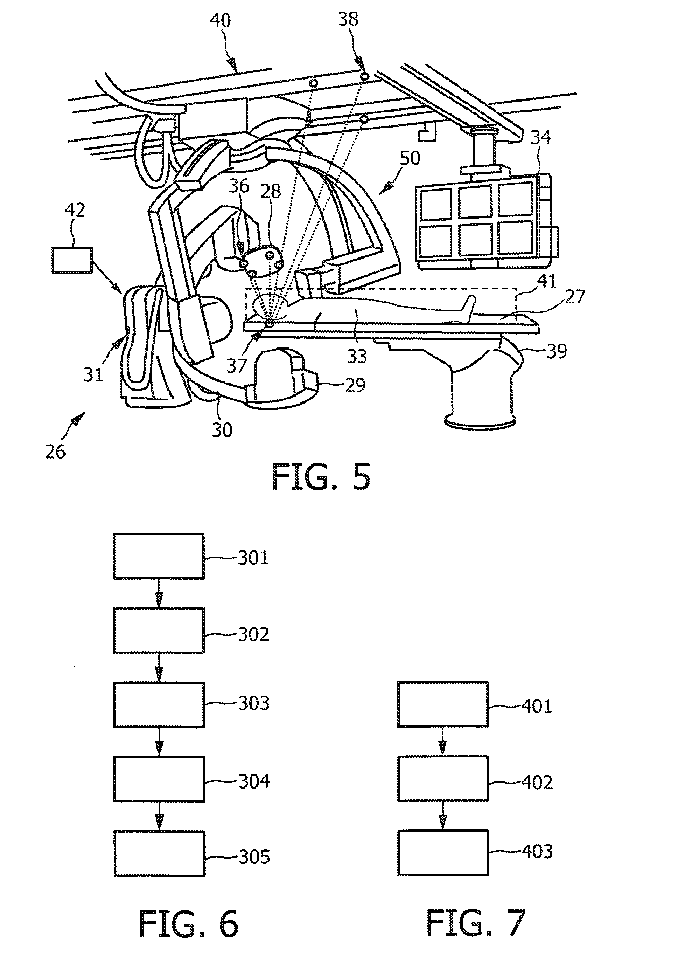

Fig. 5 shows schematically and exemplarily an imaging system 26 for imaging an object 33. The imaging system 26 comprises a position determining system as defined above for determining the position of the object 33 relative to the imaging system 26. In this embodiment, the imaging system is a C-arm, which has to be positioned relative to an object table 23 on which the object 33 being a patient is located. In order to determine the position of the patient 33 relative to the imaging system 26, the position determining system preferentially comprises transferring elements 36, 38, which are attached to the imaging system 26, and a transferring element 37 being attached to the object table 27, i.e. being indirectly attached to the patient 33. In another embodiment, the transferring element 37 can be attached directly to the patient 33. An accelerometer is integrated into the transferring element 37. Furthermore, also a gyroscope can be integrated into the transferring element 37. The accelerometer comprises preferentially three orthogonal axes in order to determine the acceleration in three dimensions. Also the gyroscope is preferentially adapted to determine the orientation in three dimensions.

The imaging system 26 comprises a first moving unit 31 for rotating a detector 28 and an X-ray source 29 forming an imaging unit around the object 33 and a second moving unit 39 for modifying the height of the object table 27. The second moving unit 39 can further be adapted to allow rotating the object table 27 and, thus, the object 33 around a vertical axis.

The imaging system 26 shown in Fig. 5 further comprises a second C-arm 50 including a detector and an X-ray source. Thus, the imaging system 26 shown in Fig. 5 is a biplane C-arm system. It should be noted that the imaging system 26 is only exemplarily shown in Fig. 5. In particular, also imaging systems with a single C-arm, either floor-mounted or ceiling-mounted or mobile C-arms, or other imaging modalities can also comprise the position determining system.

In the biplane C-arm system both C-arms can be used independently, one of the two can be used with the other parked away, or they can be used simultaneously to get two simultaneous image planes at different angles. In this embodiment, one C-arm is suspended from the ceiling, while the other one is floor-mounted.

The location of both C-arms and their components with respect to a reference coordinate frame is known and controlled by the imaging system 26. Therefore, the positions, i.e. the transfer positions, of the transferring elements 36, 38 are known relative to a reference position.

The imaging system can be adapted to move the C-arms with several degrees of freedom. For example, the imaging system can be adapted to move the C-arm by rotating the C-arm along several independent axes. Furthermore, the imaging system can be adapted to modify the height and/or the position in a horizontal plane of the C-arms. It is also possible to use C-arms that are mounted on a robotic arm in order to move the C-arm to a desired position. Moreover, the imaging system can further be adapted to move the object table, for example, to a desired height, a desired position in a horizontal plane and/or to a desired rotational position.

In general, the imaging system is adapted to move either one or several C-arms, or either the object table, or a combination of both, such that a desired relative position and/or orientation between the one or several C-arms and the object table is achieved. The imaging system can be adapted to control both, the C-arm motion and the object table motion, or any other object in the room, automatically, wherein the C-arm and/or the object table motorized and wherein manual controls are input, in which case the user operating the manual controls is provided with directions output by an output unit. Moreover, it is also possible that the C-arm and/or the table are moved manually, wherein the directions, in which the C-arm and/or the object table have to be moved, are provided by the output unit.

Since the position of the object 33 can be determined by using the position determining system, of which only the transferring elements 36, 37 and 38 are shown in Fig. 5 for clarity reasons, and since the first moving unit 31 and the second moving unit 39 can be used to move the imaging system 26 and the object 33 relative to each other such that a desired position of the object 33 with respect to the imaging system 26 is reached, by comparing a set position of the object 33 relative to the imaging system 26 with an actually determined position output by the output unit of the position determining system the object 33 can be moved to the set relative position until a difference between the set position and the actually determined position is below a predefined threshold, in particular, until these two positions are identical. Thus, the C-arm can be accurately positioned with respect to the object 33, in particular, with respect to the object table 27 on which the object is located by using the position determining system and the first and second moving units 31, 39.

The imaging system can be adapted such that the first and second moving units 31, 39 automatically move the object table 37 and, thus, the patient 33 to a desired position with respect to the imaging system. However, the imaging system 26 can also be adapted such that the output unit of the position determining system provides commands like visual, audio, tactile, et cetera commands to a user that direct or help the user to manually move the object table 27 and, thus, the object 33 and/or the C-arm 30 by using the first moving unit 31 and the second moving unit 39, respectively, such that the object 33 is positioned at a desired position, i.e. a set position, with respect to the imaging system 26. These commands can guide a user, for example, to push certain buttons for controlling the first moving unit 31 and/or the second moving unit 39 such that the object table 27 and, thus, the patient 33 reaches the desired position with respect to the imaging system 26.

The transferring elements 36 are mounted on the detector head 28 of the C-arm, and the transferring elements 38 are located at C-arm rails 40 at a ceiling of a room. The locations of these transferring elements 36, 38, i.e. the transfer positions, are known relative to a reference position. In another embodiment, the transferring elements can be located at other known locations of the imaging system and/or of the room.

Although in Fig. 5 a certain number of transferring elements is shown located at certain locations, in other embodiments another number of transferring elements can be attached at other locations. For example, more than a single transferring element 37 can be attached to the object table 27. For example, three transferring elements can be attached to the corners of the object table 27. The transferring elements are preferentially distributed such that at least three radiation paths are defined.

In Fig. 5, the position determining system and, thus, the imaging system further comprises a collision preventing unit 42 for outputting a signal, if the imaging system enters a predefined safety region around the object 33. Since the position of the transferring element 37 is determined by the position determining system, since the location of this transferring element 37 on the object table 27 is known and since typical dimensions of a patient 33 lying on the object table 27 are also known, a safety region, i.e. in this case a safety volume, can be arranged around the transferring element 37 and, thus, around the patient 33 such that the person 33 is surely completely located within the safety region. Preferentially, the safety region is in each direction a predefined percentage larger than the dimensions of the largest possible patient. This predefined percentage is, for example, five percent or larger, further preferred ten percent or larger, and even further preferred twenty percent or larger. A safety region is schematically and exemplarily indicated in Fig. 5 by the broken line 41.

The signal output by the collision preventing unit 42 is preferentially a warning signal, in particular, an acoustical and/or an optical warning signal. Moreover, the signal output by the collision preventing unit 42 is preferentially provided to the imaging system 26 such that the movement performed by the first moving unit 31 and/or the second moving unit 39 is stopped or slowed down.

Images generated by the imaging system 26 can be shown on the display unit 34.

In the following an embodiment of a position determining method for determining a position of an object will exemplarily be described with reference to a flowchart shown in Fig. 6.

In step 301, radiation is transferred between the object and a transfer position by a sending and receiving unit. Preferentially, at least one transferring element like an ultrasound transducer is attached to the object and at least three further transferring elements are provided at transfer positions being known relative to a reference position, wherein these transferring elements define three radiation paths along which distances between the transferring element attached to the object and the respective further transferring elements are determined.

In step 302, the first position determination unit determines the first position of the object relative to the reference positions based on the transferred radiation, in particular, based on measured distances between the transferring elements.

In step 303, an acceleration of the object is determined by an accelerometer, which is preferentially integrated into the transferring element attached to the object.

In step 304, the second position of the object is determined based on the determined acceleration and the determined first position by the second position determining unit, and in step 305 at least one of the first position and the second position is output by the output unit 12.

It should be noted that the acceleration of the object can also be determined before the radiation is transferred between the object and the transfer position by the sending and receiving unit.

In the following an embodiment of an imaging method for imaging an object will exemplarily be described with reference to a flowchart shown in Fig. 7.

In step 401, a position of an object to be imaged, in particular, a position of a patient lying on a patient table, is determined by a position determining system. In step 402, a moving unit of the imaging system moves the object and the imaging system relative to each other such that an actually determined position of the object is similar a predefined set position of the object relative to the imaging system. If the set position has been reached, in step 403 the imaging system images the object at the set position, to which the object has been moved.

The position determining system allows positioning a surgical table with respect to a radiological imaging system such as a C-arm. The position determining system can be used in neuro, neuro-vascular, cardiac et cetera intra-operative imaging, in particular, intra-operative X-ray imaging. For this intra-operative imaging positioning of the patient relative to the imaging equipment like a C-arm, in particular, the determination of the spatial location of the table top itself, is very important. The position determining system allows determining the position of third-party surgical tables with respect to an imaging system like a C-arm and, thus, allows positioning these third-party surgical tables with respect to the imaging system.

In many surgical applications the radiological subsystem like the C-arm does not have a fixed base position, i.e. it is mobile, for instance, put on wheels, with respect to the surgical table. In addition, it might be the case that the radiological subsystem might have a fixed base, but it is in many cases not able to communicate positional information with the surgical table, for example, due to a lack of a system integrated in the table that determines its positional information or due to a lack of an interface between the table and the radiological subsystem that enables the communication of positional information. The position determining system of the present invention allows determining the position of any surgical table or other component with respect to a radiological subsystem. Even if the line-of-sight between the transferring elements is blocked, for instance, by a surgeon or other medical personal that has to perform a procedure in such a way that they completely or partly cover the radiation path between the transferring elements, the position of the object, i.e. of the surgical table or the patient, can be determined by using the determined second position of the object. In order to obtain an accurately determined second position over a long time the determination of the second position is preferentially calibrated automatically at constant time intervals by using a reliably determined actual first position.

Although in the above described embodiments a certain distribution and number of transferring elements and accelerometers, which could be integrated into the transferring elements, have been described, the position determining system can also comprise other distributions and numbers of transferring elements and of accelerometers. For example, the above described imaging system and the corresponding object table both can comprise accelerometers. Moreover, the object table can comprise several transferring elements attached at known locations, for example, at the corners of the object table, and the imaging system can only comprise a single transferring element. If the object table and the imaging system both comprise accelerometers, the second position, which is in this example a relative position between the object table and the imaging system, can be determined by determining the acceleration of the object table and the imaging system relative to each other and by doubly integrating the determined relative acceleration yielding a relative path, along which the object table and the imaging system have been move relative to each other starting from a starting position defined by a determined first position.

Although in the above described embodiments a transferring element and an accelerometer, which is preferentially integrated in the transferring element, has been attached to the object table, in other embodiments the transferring element and the accelerometer can be attached directly to the object, for example, directly to the patient, and/or on other objects like surgical instruments to allow for instrument tracking.

Although in the above described embodiments transferring elements and accelerometers are preferentially attached to the imaging system and the object table, the transferring elements can also be mounted on one or several fixed points in a room to allow for an absolute positioning of, for example, the imaging system and/or subsystems of the imaging systems and other components within the room with respect to the room.

Although in the above described embodiments the position determining system is used in a medical environment, the position determining system can also used to determine a position of an object in another environment, for example, in manufacturing processes which need an accurately determined position of a product to be processed.

Although in the above described embodiments the transferring elements preferentially send and/or receive ultrasound, in other embodiments the transferring elements can also be adapted to send and/or receive another kind of radiation, for example, the transferring elements can be adapted to send and receive electromagnetic radiation like radio frequency radiation or optical radiation.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Determinations like the determination of the first position and of the second position and of, for example, an error of determining the first position and the second position, performed by one or several units or devices can be performed by any other number of units or devices. The determinations and/or the control of the position determining system and/or of the imaging system in accordance with the above described methods can be implemented as program code means of a computer program and/or as dedicated hardware.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

## Claims

1. An imaging system for imaging an object, the imaging system comprising:
- a position determining system for determining a position of the object (2), the position determining system (1; 101; 201) comprising:
- a first position detection unit (5; 105; 205) comprising a sending and receiving unit (3; 103, 114; 203, 214, 216, 217) for transferring ultrasound radiation (6, 7; 106, 107; 206, 207) between the object (2) and a transfer position being known relative to a reference position, and a first position determining unit (4; 104; 204) for determining a first position of the object (2) relative to the reference position based on the transferred ultrasound radiation (6, 7; 106, 107; 206, 207), wherein the first position is determined relative to the imaging system,
- a second position detection unit (35) comprising an accelerometer (8) for determining an acceleration of the object (2), and a second position determining unit (9) for determining a second position of the object (2) relative to the reference position based on the determined acceleration and the determined first position, wherein the second position is determined relative to the imaging system,
- an output unit (12) for outputting at least one actual position being at least one of the first position and the second position
- an imaging unit for imaging the object, and
- a moving unit for moving the imaging unit and the object relative to each other to a set position depending on the at least one actual position of the object relative to the imaging system.

2. The imaging system as defined in claim 1, wherein the sending and receiving unit (3) is adapted to send radiation to the object (2) for being reflected by the object (2) and to receive radiation reflected by the object (2).

3. The imaging system as defined in claim 1, wherein the sending and receiving unit (103, 114) comprises a first transferring element (103) located at the transfer position and a second transferring element (114) for being attached to the object (2), wherein the first transferring element (103) and the second transferring element (114) are adapted for transferring radiation between the first transferring element (103) and the second transferring element (114), wherein the first position determining unit (104) is adapted to determine the first position depending on the transferred radiation.

4. The imaging system as defined in claim 3, wherein the sending and receiving unit comprises at least three first transferring elements (203, 216, 217) located at transfer positions being known relative to the reference position and at least one second transferring element (214) for being attached to the object (2), wherein the at least three first transferring elements (214) and the at least one second transferring element (214) are adapted to transfer radiation (206, 207) between the at least three first transferring elements (214) and the at least one second transferring element (214), wherein the first position determining unit (204) is adapted to determine the first position depending on the transferred radiation (206, 207).

5. The imaging system as defined in claim 1, wherein the position determining system further comprises an error determination unit (18) for determining an error of at least one of the first position and the second position, wherein the output unit (12) is adapted to output at least one of the first position and the second position based on the determined error.

6. The imaging system as defined in claim 1, wherein the second position determining unit (9) is adapted to use the determined first position as a start position, to determine a movement of the object (2) starting from the start position based on the determined acceleration and to determine the second position based on the start position and the determined movement of the object (2).

7. The imaging system as defined in claim 1, wherein the second position detection unit (35) comprises a gyroscope (19) for being attached to the object (2) for determining the orientation of the object, wherein the second position determining unit (35) is adapted to use the determined first position as a start position, to determine a movement of the object starting from the start position based on the determined acceleration and the orientation of the object determined by the gyroscope, and to determine the second position based on the start position and the determined movement of the object.

8. The imaging system as defined in claim 1, further comprising a moving unit control unit (25) for controlling the moving unit depending on the output at least one of the first position and the second position of the object for moving the object to a set position.

9. The imaging system as defined in claim 1, wherein the position determining system is adapted to determine the first position and the second position of the object (33) relative to a position of a further object (26), wherein the position determining system further comprises a collision preventing unit (42) for determining if the further object (26) enters a predefined safety region (41) around the object (33) and for outputting a signal if the collision preventing unit (42) has determined that the further object (26) enters the predefined safety region (41).

10. An imaging method for imaging an object, the imaging method being adapted to use the imaging system as defined in claim 1 and comprising the steps of:
- detecting a first position of the object (2) by a first position detection unit (5; 105; 205) comprising a sending and receiving unit (3; 103, 114; 203, 214, 216, 217) and a first position determination unit (4; 104; 204), wherein ultrasound radiation (6; 106; 206) is transferred between the object (2) and a transfer position being known relative to a reference position by the sending and receiving unit (3; 103, 114; 203, 214, 216, 217) and wherein the first position of the object (2) relative to the reference position is determined based on the transferred ultrasound radiation (6, 7; 106, 107; 206, 207) by the first position determination unit (4; 104; 204), wherein the first position is determined relative to the imaging system,
- detecting a second position of the object (2) by a second position detection unit comprising an accelerometer (8) and a second position determining unit (9), wherein an acceleration of the object (2) is determined by the accelerometer (8), and wherein a second position of the object (2) relative to the reference position is determined based on the determined acceleration and the determined first position by the second position determining unit (9), wherein the second position is determined relative to the imaging system,
- outputting at least one actual position being at least one of the first position and the second position by an output unit (12),
- imaging the object by an imaging unit, and
- moving the imaging unit and the object relative to each other to a set position depending on the at least one actual position of the object relative to the imaging system by a moving unit.

11. A computer program for imaging an object, the computer program comprising program code means for causing an imaging system (26) as defined in claim 1 to carry out the steps of the imaging method as defined in claim 10, when the computer program is run on a computer controlling the imaging system (26).

## Patentansprüche

1. Bildformungssystem zur Bildformung eines Objektes, wobei das Bildformungssystem Folgendes umfasst:
- ein Positionsbestimmungssystem zum Bestimmen einer Position des Objektes (2), wobei das Positionsbestimmungssystem (1; 101; 201) Folgendes umfasst:
- eine erste Positionsdetektionseinheit (5; 105; 205) mit einer Sende- und einer Empfangseinheit (3; 103, 114; 203, 214, 216, 217) zum Übertragen von Ultraschallstrahlung (6, 7; 106, 107; 206, 207) zwischen dem Objekt (2) und einer gegenüber einer Bezugsposition bekannten Übertragungsposition und mit einer ersten Positionsbestimmungseinheit (4; 104; 204) zum Bestimmen einer ersten Position des Objektes (2) gegenüber der Bezugsposition auf Basis der übertragenen Ultraschallstrahlung (6, 7; 106, 107; 206, 207), wobei die erste Position gegenüber dem Bildformungssystem bestimmt wird,
- eine zweite Positionsdetektionseinheit (35) mit einem Beschleunigungsmesser (8) zum Bestimmen einer Beschleunigung des Objektes (2), und eine zweite Positionsbestimmungseinheit (9) zum Bestimmen einer zweiten Position des Objektes (2) gegenüber der Bezugsposition auf Basis der ermittelten Beschleunigung und der ermittelten ersten Position, wobei die zweite Position gegenüber dem Bildformungssystem bestimmt wird.,
- eine Ausgangseinheit (12) zum Ausliefern wenigstens einer Ist-Position, welche die erste oder die zweite Position sein kann,
- eine Bildformungseinheit zur Bildformung des Objektes, und
- eine Verlagerungseinheit zur Verlagerung der Bildformungseinheit und des Objektes gegenüber einander zu einer Einstellposition, und zwar abhängig von der wenigstens einen Ist-Position des Objektes gegenüber dem Bildformungssystem.

2. Bildformungssystem nach Anspruch 1, wobei die Sende- und Empfangseinheit (3) dazu vorgesehen ist, dem Objekt (2) Strahlung zuzusenden, die an dem Objekt (2) reflektiert wird, und an dem Objekt (2) reflektierte Strahlung zu empfangen.

3. Bildformungssystem nach Anspruch 1, wobei die Sende- und Empfangseinheit (103, 114) ein erstes Übertragungselement (103) in der Übertragungsposition aufweist, und ein zweites Übertragungselement (114) zur Befestigung an dem Objekt (2), wobei das erste Übertragungselement (103) und das zweite Übertragungselement (114) dazu vorgesehen sind, Strahlung zwischen dem ersten Übertragungselement (103) und dem zweiten Strahlungselement (114) zu übertragen, wobei das erste Positionsbestimmungselement (104) dazu vorgesehen ist, die erste Position in Abhängigkeit von der übertragenen Strahlung zu bestimmen.

4. Bildformungssystem nach Anspruch 3, wobei die Sende- und Empfangseinheit wenigstens drei erste Übertragungselemente (203, 216, 217) in bekannten Übertragungspositionen gegenüber der Bezugsposition aufweist und wenigstens ein zweites Übertragungselement (214) zur Befestigung an dem Objekt (2), wobei die wenigstens drei ersten Übertragungselemente (214) und das wenigstens eine zweite Übertragungselement (214) dazu vorgesehen sind, Strahlung (206, 207) zwischen den wenigstens drei ersten Übertragungselementen (214) und dem wenigstens einen zweiten Übertragungselement (214) zu übertragen, wobei die erste Positionsbestimmungseinheit (204) dazu vorgesehen ist, die erste Position in Abhängigkeit von der übertragenen Strahlung (206, 207) zu bestimmen.

5. Bildformungssystem nach Anspruch 1, wobei das Positionsbestimmungssystem weiterhin eine Fehlerbestimmungseinheit (18) aufweist zur Bestimmung eines Fehlers wenigstens der ersten und der zweiten Position, wobei die Ausgangseinheit (12) dazu vorgesehen ist, wenigstens der ersten oder der zweiten Position auszuliefern, und zwar auf Basis des ermittelten Fehlers.

6. Bildformungssystem nach Anspruch 1, wobei die zweite Positionsbestimmungseinheit (9) dazu vorgesehen ist, die erste bestimmte Position als Startposition zu verwenden, und zwar zum Ermitteln einer Verlagerung des Objektes (2) ausgehend von der Startposition auf Basis der ermittelten Beschleunigung und zum Bestimmen der zweiten Position auf Basis der Startposition und der ermittelten Verlagerung des Objektes (2).

7. Bildformungssystem nach Anspruch 1, wobei die zweite Positionsbestimmungseinheit (35) ein Gyroskop (19) zur Befestigung an dem Objekt (2) aufweist, und zwar zur Ermittlung der Orientierung des Objektes, wobei die zweite Positionsbestimmungseinheit (35) dazu vorgesehen ist, die ermittelte erste Position als Startposition zu verwenden, eine Verlagerung des Objektes zu ermitteln, und zwar ausgehend von der Startposition auf Basis der ermittelten Beschleunigung und der durch das Gyroskop ermittelten Orientierung des Objektes, und die zweite Position auf Basis der Startposition und der ermittelten Verlagerung des Objektes zu ermitteln.

8. Bildformungssystem nach Anspruch 1, das weiterhin eine Verlagerungseinheitssteuereinheit (25) zur Steuerung der Verlagerungseinheit in Abhängigkeit von dem Ausgang wenigstens der ersten Position oder der zweiten Position des Objektes zur Verlagerung des Objektes zu einer Einstellposition aufweist.

9. Bildformungssystem nach Anspruch 1, wobei das Positionsbestimmungssystem dazu vorgesehen ist, die erste Position und die zweite Position des Objektes (33) gegenüber einer Position eines weiteren Objektes (26) zu bestimmen, wobei das Positionsbestimmungssystem weiterhin eine Zusammenstoßvermeidungseinheit (42) aufweist, und zwar zur Ermittlung, ob das weitere Objekt (26) in ein vorher definiertes Sicherheitsgebiet (41) um das Objekt (33) herum eintritt und zum Ausliefern eines Signals, falls die Zusammenstoßvermeidungseinheit (42) ermittelt hat, dass das weitere Objekt (26) in das vorher definierte Sicherheitsgebiet (41) eintritt.

10. Bildformungsverfahren zur Bildformung eines Objektes, wobei das Bildformungsverfahren dazu vorgesehen ist, das Bildformungssystem nach Anspruch 1 zu verwenden und die nachfolgenden Verfahrensschritte umfasst:
- das Detektieren einer ersten Position des Objektes (2) durch eine erste Positionsdetektionseinheit (5; 105; 205) mit einer Sende- und einer Empfangseinheit (3; 103, 114; 203, 214, 216, 217) und einer ersten Positionsbestimmungseinheit (4; 104; 204), wobei Ultraschallstrahlung (6; 106; 206) zwischen dem Objekt (2) und einer gegenüber einer Bezugsposition bekannten Übertragungsposition von der Sende- und Empfangseinheit (3; 103, 114; 203, 214, 216, 217) übertragen wird, und wobei die erste Position des Objektes (2) gegenüber der Bezugsposition auf Basis der übertragenen Ultraschallstrahlung (6, 7; 106, 107; 206, 207) durch die erste Positionsbestimmungseinheit (4; 104; 204) bestimmte wird, wobei die erste Position gegenüber dem Bildformungssystem bestimmt wird,
- das Detektieren einer zweiten Position des Objektes (2) durch eine zweite Positionsbestimmungseinheit mit einem Beschleunigungsmesser (8) und einer zweiten Positionsbestimmungseinheit (9), wobei eine Beschleunigung des Objektes (2) durch den Beschleunigungsmesser (8) ermittelt wird, und wobei eine zweite Position des Objektes (2) gegenüber der Bezugsposition auf Basis der ermittelten Beschleunigung und der ermittelten ersten Position durch die zweite Positionsbestimmungseinheit (9) ermittelt wird, wobei die zweite Position gegenüber dem Bildformungssystem ermittelt wird,
- das Ausliefern wenigstens einer Ist-Position, welche die erste oder die zweite Position sein kann, durch eine Ausgangseinheit (12),
- das Formen des Bildes durch eine Bildformungseinheit, und
- das Verlagern der Bildformungseinheit und des Objektes gegenüber einander zu einer Einstellposition in Abhängigkeit von wenigstens einer Ist-Position des Objektes gegenüber dem Bildformungssystem, und zwar durch eine Verlagerungseinheit.

11. Computerprogramm zur Bildformung eines Objektes, wobei das Computerprogramm Programmcodemittel aufweist, damit ein Bildformungssystem (26) nach Anspruch 1 die Verfahrensschritte des Bildformungsverfahren nach Anspruch 10 durchführt, wenn das Computerprogramm in einem das Bildformungssystem (26) steuernden Computer durchgeführt wird.

## Revendications

1. Système d'imagerie pour représenter un objet par une image, le système d'imagerie comprenant :
- un système de détermination de position pour déterminer une position de l'objet (2), le système de détermination de position (1 ; 101 ; 201) comprenant :
- une première unité de détection de position (5 ; 105 ; 205) comprenant une unité d'envoi et de réception (3 ; 103, 114 ; 203, 214, 216, 217) pour transférer un rayonnement d'ultrasons (6, 7 ; 106, 107 ; 206, 207) entre l'objet (2) et une position de transfert étant connue par rapport à une position de référence, et une première unité de détermination de position (4 ; 104 ; 204) pour déterminer une première position de l'objet (2) par rapport à la position de référence sur la base du rayonnement d'ultrasons transféré (6, 7 ; 106, 107 ; 206, 207), dans laquelle la première position est déterminée par rapport au système d'imagerie ;
- une deuxième unité de détection de position (35) comprenant un accéléromètre (8) pour déterminer une accélération de l'objet (2) et une deuxième unité de détermination de position (9) pour déterminer une deuxième position de l'objet (2) par rapport à la position de référence sur la base de l'accélération déterminée et de la première position déterminée, dans laquelle la deuxième position est déterminée par rapport au système d'imagerie ;
- une unité de sortie (12) pour fournir au moins une position réelle étant au moins une de la première position et de la deuxième position ;
- une unité d'imagerie pour représenter l'objet par une image ; et
- une unité de déplacement pour déplacer l'unité d'imagerie et l'objet l'une par rapport à l'autre afin de définir une position en fonction de l'au moins une position réelle de l'objet par rapport au système d'imagerie.

2. Système d'imagerie, tel que défini dans la revendication 1, dans lequel l'unité d'envoi et de réception (3) est adaptée de manière à envoyer un rayonnement à l'objet (2) pour être réfléchi par l'objet (2) et à recevoir un rayonnement qui est réfléchi par l'objet (2).

3. Système d'imagerie, tel que défini dans la revendication 1, dans lequel l'unité d'envoi et de réception (103, 114) comprend un premier élément de transfert (103) qui se situe à l'endroit de la position de transfert (114) pour être fixé à l'objet (2), dans laquelle le premier élément de transfert (103) et le deuxième élément de transfert (114) sont adaptés de manière à transférer un rayonnement entre le premier élément de transfert (103) et le deuxième élément de transfert (114) et dans laquelle la première unité de détermination (104) est adaptée de manière à déterminer la première position en fonction du rayonnement transféré.

4. Système d'imagerie, tel que défini dans la revendication 3, dans lequel l'unité d'envoi et de réception comprend au moins trois premiers éléments de transfert (203, 216, 217) qui se situent à l'endroit des positions de transfert étant connues par rapport à la position de référence et au moins un deuxième élément de transfert (214) pour être fixé à l'objet (2), dans laquelle les au moins trois premiers éléments de transfert (214) et l'au moins un deuxième élément de transfert (214) sont adaptés de manière à transférer un rayonnement (206, 207) entre les au moins trois premiers éléments de transfert (214) et l'au moins un deuxième élément de transfert (214), dans laquelle la première unité de détermination de position (204) est adaptée de manière à déterminer la première position en fonction du rayonnement transféré (206, 207).

5. Système d'imagerie, tel que défini dans la revendication 1, dans lequel le système de détermination de position comprend en outre une unité de détermination d'erreur (18) pour déterminer une erreur d'au moins une de la première position et de la deuxième position, dans laquelle l'unité de sortie (12) est adaptée de manière à fournir au moins une de la première position et de la deuxième position sur la base de l'erreur déterminée.

6. Système d'imagerie, tel que défini dans la revendication 1, dans lequel la deuxième unité de détermination de position (9) est adaptée de manière à utiliser la première position déterminée en tant qu'une position de départ afin de déterminer un déplacement de l'objet (2) à partir de la position de départ sur la base de l'accélération déterminée et afin de déterminer la deuxième position sur la base de la position de départ et du déplacement déterminé de l'objet (2).

7. Système d'imagerie, tel que défini dans la revendication 1, dans lequel la deuxième unité de détection de position (35) comprend un gyroscope (10) pour être fixé à l'objet (2) afin de déterminer l'orientation de l'objet, dans laquelle la deuxième unité de détermination de position (35) est adaptée de manière à utiliser la première position déterminée en tant qu'une position de départ afin de déterminer un déplacement de l'objet à partir de la position de départ sur la base de l'accélération déterminée et de l'orientation de l'objet qui est déterminée par le gyroscope, et afin de déterminer la deuxième position sur la base de la position de départ et du déplacement déterminé de l'objet.

8. Système d'imagerie, tel que défini dans la revendication 1, comprenant en outre une unité de commande (25) de l'unité de déplacement pour commander l'unité de déplacement fonction de la sortie d'au moins une de la première position et de la deuxième position de l'objet afin de déplacer l'objet à une position définie.

9. Système d'imagerie, tel que défini dans la revendication 1, dans lequel le système de détermination de position est adapté de manière à déterminer la première position et la deuxième position de l'objet (33) par rapport à une position d'un nouveau autre objet (26), dans lequel le système de détermination de position comprend en outre une unité de prévention de collisions (42) pour déterminer si le nouveau autre objet (26) entre dans une zone de sécurité prédéfinie (41) autour de l'objet (33) et pour fournir un signal si l'unité de prévention de données (42) a déterminé que le nouveau autre objet (26) entre dans la région de sécurité prédéfinie (41).

10. Procédé d'imagerie pour représenter un objet par une image, le procédé d'imagerie étant adapté de manière à utiliser le système d'imagerie, tel que défini dans la revendication 1, et comprenant les étapes suivantes consistant à :
- détecter une première position de l'objet (2) par une première unité de détection de position (5 ; 105 ; 205) comprenant une unité d'envoi et de réception (3 ; 103, 114 ; 203, 214, 216, 217) et une première unité de détermination de position (4 ; 104 ; 204), dans laquelle un rayonnement d'ultrasons (6, 106, 206) est transféré entre l'objet (2) et une position de transfert étant connue par rapport à une position de référence par l'unité d'envoi et de réception (3 ; 103, 114 ; 203, 214, 216, 217) et dans laquelle la première position de l'objet (2) par rapport à la position de référence est déterminée sur la base du rayonnement d'ultrasons transféré (6, 7 ; 106, 107 ; 206, 207) par la première unité de détermination de position (4 ; 104 ; 204), dans laquelle la première position est déterminée par rapport au système d'imagerie ;
- détecter une deuxième unité de l'objet (2) par une deuxième unité de détection de position comprenant un accéléromètre (8) et une deuxième unité de détermination de position (9), dans laquelle une accélération de l'objet (2) est déterminée par l'accéléromètre (8) et dans laquelle une deuxième position de l'objet (2) par rapport à la position de référence est déterminée sur la base de l'accélération déterminée et de la première position déterminée par la deuxième unité de détermination de position (9), dans laquelle la deuxième position est déterminée par rapport au système d'imagerie ;
- fournir, par une unité de sortie (12), au moins une position réelle étant au moins une de la première position et de la deuxième position ;
- représenter l'objet par une unité d'imagerie ; et
- déplacer, par une unité de déplacement, l'unité d'imagerie et l'objet l'une par rapport à l'autre à une position définie en fonction de l'au moins une position réelle de l'objet par rapport au système d'imagerie.

11. Programme informatique pour représenter un objet par une image, le programme informatique comprenant des moyens de code de programme pour assurer qu'un système d'imagerie (26), tel que défini dans la revendication 1, effectue les étapes du procédé d'imagerie, tel que défini dans la revendication 10, lorsque le programme informatique est exécuté sur un ordinateur qui commande le système d'imagerie (26).
